# EUROPEAN PATENT APPLICATION

(11) **EP 2 166 626 A1**
(43) Date of publication of application: **24.03.2010**
(21) Application number: 08016395.9
(22) Date of filing: 17.09.2008
(51) Int. Cl.: H01S 3/00, H01S 3/225, H01S 3/034, H01S 3/23

(54) **Method of reducing a divergence of a laser beam**

(71) Applicant: Carl Zeiss SMT AG, 73447 Oberkochen (DE)
(72) Inventor: Holderer, Hubert, 73447 Oberkochen (DE); Tayebati, Payam, 89075 Ulm (DE)
(74) Representative: Grünecker, Kinkeldey, Stockmair & Schwanhäusser Anwaltssozietät

(57) **Abstract**

A laser comprising at least one active medium and a plurality of optical elements is provided. At least some of the optical elements form at least one resonator. An alteration of one of the plurality of optical elements is determined, wherein the alteration is adapted to reduce a distortion of a wavefront of light emitted by the laser. At least one portion of the one of the optical elements is removed to change a shape of the one of the optical elements on the basis of the determined alteration. Thus, a divergence of a laser beam emitted by the laser can be reduced.

## Description

Methods of manufacturing electronic devices such as, for example, liquid crystal displays, may comprise a deposition of a semiconductor film, for example a silicon film, on the surface of a substrate. The substrate may, for example, comprise glass or plastic. After the formation of the semiconductor film, electrical circuits comprising circuit elements such as transistors, capacitors and/or resistors may be formed in the semiconductor film.

Known methods for the deposition of semiconductor film such as, for example, chemical vapor deposition and/or plasma-enhanced chemical vapor deposition may yield an amorphous semiconductor film. The amorphous structure of the semiconductor film, however, may adversely affect the performance of circuit elements formed in the semiconductor film, since an amorphous semiconductor material may have a lower charge carrier mobility than a crystalline semiconductor material.

In order to improve the performance of the circuit elements, it has been proposed to perform an annealing of the semiconductor film to induce a crystallization of the semiconductor material. For this purpose, the semiconductor film may be irradiated with electromagnetic radiation from a laser source, for example a pulsed ultraviolet laser such as an excimer laser. An irradiation optics may be used to irradiate an elongated portion of the surface of the semiconductor film with the laser radiation. The laser radiation is absorbed by the semiconductor film. Due to the short duration of the laser pulses, and due to the strong absorption of ultraviolet light in semiconductor materials such as silicon, the semiconductor film may selectively be heated, wherein the substrate is only exposed to a moderate temperature. Thus, damages of the substrate may be reduced or substantially avoided.

Lasers according to the state of the art, in particular excimer lasers, may provide a laser beam having a relatively high divergence. The divergence of the laser radiation may lead to a loss of radiation energy, and may also lead to a heating of components of the irradiation optics by stray light. Hence, reducing the divergence of the radiation emitted by a laser used for the irradiation of a semiconductor film on a substrate might help to accelerate the annealing process, and to reduce an undesirable heating of the irradiation optics.

US 6,493,374 B1 discloses a laser wherein the curvature of a grating provided in a line narrowing package is adjusted to give the grating shapes more complicated than simple convex or simple concave. The grating may be deformed by means of a grating curvature stepper motor or by means of piezoelectric transducers. To determine the curvature imposed on the grating, a figure of merit is defined in order to judge optimal laser performance. The best figure of merit is disclosed to combine the several parameters which are most important for determining success in the application, such as lithography exposure. The divergence of a laser beam at the output coupler aperture may be monitored, and parameters such as the beam divergence may be used to optimize the laser performance.

US 6,625,191 B2 discloses an injection seeded modular gas discharge laser system which comprises two separate discharge chambers, one of which is part of a master oscillator producing a very narrow band seed beam which is amplified in the second discharge chamber. In the master oscillator, intercavity wavefront correction, which may include multiple bends of the grating in the line narrowing module, can be performed.

According to US 6,493,374 B1 and US 6,625,191 B2, dynamic variations of the divergence of a laser beam may be corrected. In addition to dynamic variations of the divergence of the laser beam, however, the divergence of the laser beam may comprise substantially static or very slowly variable portions.

It is an object of the present invention to provide a method of reducing a divergence of a laser which is particularly adapted for the correction of substantially static or very slowly variable contributions to laser beam divergence.

A method of reducing a divergence of a laser beam according to the present invention comprises providing a laser comprising at least one active medium and a plurality of optical elements. At least some of the optical elements form at least one resonator. An alteration of one of the plurality of optical elements is determined, wherein the alteration is adapted to reduce a distortion of a wavefront of electromagnetic radiation emitted by the laser. At least one portion of the one of the optical elements is removed to change a shape of the at least one of the optical elements on the basis of the determined alteration.

Perturbations in the laser may cause a difference between the actual wavefront of the electromagnetic radiation emitted by the laser and the desired wavefront of the electromagnetic radiation. Since an unevenness of the wavefront is related to the divergence of the radiation, this may lead to an undesirable divergence of the radiation, which may lead to a loss of laser power and to an undesirable heating of optical components. The present invention allows to reduce a difference between the actual wavefront and the desired wavefront of the laser beam. Thus, a divergence of the laser beam may be reduced and/or the wavefront of the laser beam may be shaped such that a laser beam of a desired shape may be obtained by further optical elements such as, for example, an irradiation optics comprising one or more lenses.

In some embodiments, the laser is operated for determining the alteration of the one of the plurality of optical elements. A wavefront of electromagnetic radiation emitted by the laser is measured. A difference between the measured wavefront and a desired wavefront is calculated. The alteration of the one of the plurality of optical elements is calculated on the basis the difference between the measured wavefront and the desired wavefront.

The measurement of the wavefront of the laser allows to determine perturbations of the wavefront of the laser, and the perturbations may be corrected by means of the one of the plurality of optical elements.

In some embodiments, the measurement of the wavefront of electromagnetic radiation emitted by the laser comprises supplying at least a portion of the electromagnetic radiation emitted by the laser to a Schack-Hartmann wavefront sensor.

A Schack-Hartmann wavefront sensor allows precise measurements of the wavefront, such that a precise correction of perturbations of the wavefront may be obtained.

In some embodiments, the laser is adapted for emitting pulsed laser radiation. In such embodiments, measuring the wavefront of electromagnetic radiation emitted by the laser comprises performing measurements of the wavefront for a plurality of laser pulses and calculating an average of the measurements.

In the laser, perturbations of the wavefront may occur on different timescales. Some perturbations may occur on relatively short timescales such as, for example, perturbations caused by turbulences in the gas flow of a gas laser or vibrations of components of the laser. Other perturbations may occur on intermediate timescales, for example perturbations caused by a deteriorations of components of the laser, or fluctuations of temperature as well as humidity and pressure of the ambient air. In gas lasers, fluctuations on intermediate timescales may also be caused by variations of composition, pressure and temperature of the laser gas. Further perturbations may be substantially independent of time or may occur on extremely long timescales such as, for example, perturbations caused by a deviation between the actual shape of optical elements in the laser and their ideal shape, or, in case of a gas laser, local static pressure differences in the laser gas flow. Perturbations occurring on relatively short timescales may vary from pulse to pulse. Due to the averaging of the measurements of the wavefront, the perturbations occurring on relatively short timescales may be averaged out. By performing an average over a greater period of time, perturbations occurring on intermediate timescales may also be averaged out. Thus, perturbations occurring on very long timescales and, in particular, substantially stationary perturbations may be determined.

In some embodiments, determining the alteration of the one of the plurality of optical elements comprises directing electromagnetic radiation from a reference light source to a beam splitter to form a first beam and a second beam. The first beam is directed to the laser such that the first beam is reflected in the laser. The second beam is reflected at a reference mirror. The reflected first beam and the reflected second beam are superimposed, and an interference pattern of the reflected first beam and the reflected second beam is measured. The alteration of the one of the plurality of optical elements is calculated on the basis of the measured interference pattern.

In such embodiments, perturbations of the wavefront of the laser, for example perturbations caused by a deviation of the shape of optical elements of the laser such as, for example, mirrors of the resonator, from their ideal shape may be corrected without actually operating the laser. This may help to reduce perturbations of the wavefront before the completion of the manufacturing of the laser.

In some embodiments, the plurality of optical elements comprises a laser output mirror. The method further comprises forming a reflective coating on the laser output mirror. The determination of the alteration of the one of the plurality of optical elements is performed before the formation of the reflective coating.

After the formation of the reflective coating, the laser output mirror may transmit a relatively small fraction of electromagnetic radiation from the reference source impinging thereon. If interferometric measurements are performed to determine the alteration of the one of the plurality of optical elements, a greater fraction of the first beam may be supplied to the laser if the reflective coating is not present while the interferometric measurements are performed. This may help to improve the precision of the measurements.

In some embodiments, the laser is a gas laser comprising a fan for creating flow of a laser gas, and the fan is operated during the measurement of the interference pattern.

Thus, perturbations of the wavefront caused by the flow of the laser gas, for example pressure differences in the laser gas and/or turbulences of the laser gas, may be considered in the determination of the alteration of the at least one optical element.

In some embodiments, the laser is not operated to emit laser radiation during the measurement of the interference pattern.

In some embodiments, the one of the plurality of optical elements comprises a plane-parallel plate provided in an optical path of the laser. Removing a portion of the one of the plurality of optical elements comprises machining the plane-parallel plate.

The plane-parallel plate may be added to an existing laser. Before the machining, the plane-parallel plate may have a relatively small influence on the wavefront of the laser, such that is does not significantly interfere with the operation of the laser. After the machining, electromagnetic radiation may be refracted at the surface of the plate, which may then deviate from a substantially planar shape. Thus, the wavefront may be corrected to reduce the divergence of the laser beam. Hence, the divergence of the laser beam produced by an existing laser apparatus may be reduced at a relatively small effort.

In some embodiments, the laser comprises a master oscillator and a power amplifier and the plane-parallel plate is provided between the master oscillator and the power amplifier.

Thus, perturbations of the wavefront of electromagnetic radiation emitted by the master oscillator may be reduced, and a laser beam having a corrected wavefront may be supplied to the power amplifier for amplification. Since the intensity of the electromagnetic radiation emitted by the master oscillator can be smaller than the intensity of the electromagnetic radiation emitted by the power amplifier, the plane-parallel plate is exposed to a relatively small intensity of electromagnetic radiation. This may help to avoid a deterioration of the plate caused by the electromagnetic radiation.

In some embodiments, the laser comprises a master oscillator and a power amplifier and the plane-parallel plate is provided downstream of the power amplifier. Thus, both perturbations of the wavefront caused by the master oscillator and perturbations of the wavefront caused by the power oscillator can be corrected.

In some embodiments, the one of the plurality of optical elements is an optical element forming a part of the at least one resonator. Removing a portion of the one of the optical elements comprises machining the one of the plurality of optical elements.

In some embodiments, the one of the plurality of optical elements comprises a mirror of the at least one laser resonator. Hence, no additional optical elements are required to reduce the divergence of the laser beam.

In some embodiments, an alteration of two or more of the plurality of optical elements adapted to reduce a distortion of the wavefront is determined. The shape of each of the two or more of the plurality of optical elements is changed on the basis of the determined alteration. This may help to provide a more efficient correction of wavefront perturbations than a correction by means of a single optical element.

In some embodiments, the laser comprises a master oscillator and a power amplifier. The shape of a first of the two or more of the plurality of optical elements is changed to reduce distortions of a wavefront of electromagnetic radiation emitted by the master oscillator and a shape of a second of the two or more of the plurality of optical elements is changed to correct distortions of a wavefront of electromagnetic radiation emitted by the power amplifier. Thus, perturbations caused by the master oscillator may be corrected before the electromagnetic radiation emitted by the master oscillator is amplified by the power amplifier. This may help to reduce or substantially avoid an amplification of wavefront perturbations. Additionally, a correction of perturbations which are caused by the power amplifier may be performed.

Embodiments of the present invention will be described with reference to the accompanying drawings, wherein

Fig. 1 shows a schematic cross-sectional view of a laser in a stage of a method according to an embodiment of the present invention; and

Figs. 2a and 2b show schematic cross-sectional views of a laser in stages of a method according to another embodiment of the present invention.

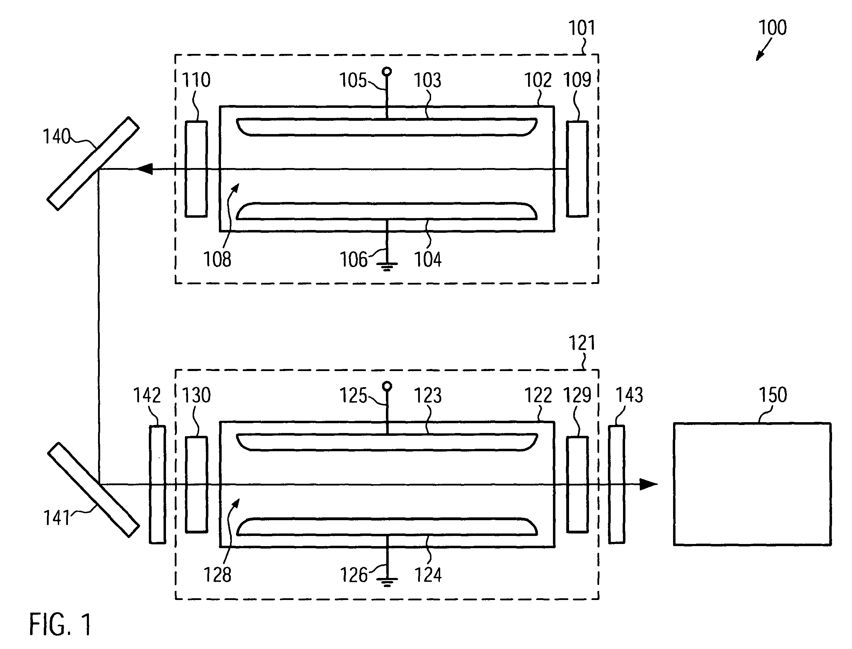

In the following, embodiments of the present invention will be described with reference to Fig. 1, which shows a schematic cross-sectional view of a laser 100 in a stage of a method according to the present invention.

The laser 100 comprises a master oscillator 101 and a power amplifier 121. The master oscillator comprises a vessel 102, wherein a laser gas 108 is provided. In the laser gas 108, electrodes 103, 104 are provided. The electrodes 103, 104 may be connected to a power source (not shown) by means of electrical connections 105, 106. The master oscillator 101 further comprises an output mirror 110 and a back mirror 109, which form a resonator of the master oscillator 101. The back mirror 109 may be adapted to reflect substantially all electromagnetic radiation impinging thereon, and the output mirror 110 may be adapted to reflect a portion of electromagnetic radiation impinging thereon and to transmit another portion of the electromagnetic radiation.

Similar to the master oscillator 101, the power amplifier 121 comprises a vessel 122 wherein a laser gas 128 is provided, electrodes 123, 124 which may be connected to a power source (not shown) by means of electrical connections 125, 126, and a laser resonator comprising an output mirror 129 and a back mirror 130.

The laser 100 further comprises mirrors 140, 141 adapted to direct electromagnetic radiation emitted by the master oscillator 101 to the power amplifier 121. Similar to the output mirror 110 of the master oscillator 101, the output mirror 129 of the power amplifier 121 may also be configured to transmit a portion of the electromagnetic radiation impinging thereon and to reflect another portion of the electromagnetic radiation impinging thereon.

The laser gas 108 in the master oscillator and the laser gas 128 in the power amplifier 121 may provide a laser active medium when an electric discharge is created by applying an electric voltage between the electrodes 103, 104 and the electrodes 123, 124. In some embodiments, the laser 108 can be an excimer laser, for example an ArF laser. In such embodiments, the laser gases 108, 128 may comprise a gas mixture comprising argon and fluorine and, optionally, one or more further gases such as helium and/or neon.

Reflectivities of the mirrors 109, 110 of the master oscillator 102 can be adapted such that an amplification of radiation in the master oscillator 101 is above the laser threshold. Hence, self-excited laser emission may occur in the master oscillator 101. Reflectivities of the mirrors 129, 130 in the power amplifier 121, to the contrary, may be adapted such that an amplification of radiation in the power amplifier 121 is below the laser threshold. However, the power amplifier 121 may amplify electromagnetic radiation emitted by the master oscillator 102 and supplied to the master oscillator 121 via the mirrors 140, 141.

In addition to the back mirrors 109, 130, the output mirrors 110, 129 and the mirrors 140, 141, the laser 100 may comprise one or more further optical elements 142, 143, the shape of which may be changed for reducing a divergence of a laser beam emitted by the laser 100, as will be explained in the following. In some embodiments, each of the optical elements 142, 143 may comprise a plane-parallel plate. A first plane-parallel plate 142 may be provided between the master oscillator 101 and the power amplifier 121, and a second plane-parallel plate 143 may be provided downstream of the power amplifier 121.

In this context, the term "provided between the master oscillator 101 and the power amplifier 121" may include a variety of arrangements of the plane-parallel plate 142 which are adapted such that electromagnetic radiation emitted by the master oscillator 101 is transmitted through the plane-parallel plate 142 before being supplied to the power amplifier. While, in some embodiments, the plane-parallel plate 142 may be positioned adjacent the back mirror 130 of the power amplifier 121 such that the electromagnetic radiation emitted by the master oscillator 101 is transmitted through the plane-parallel plate 142 after being reflected by the mirror 141, in other embodiments, the plane-parallel plate 142 may be arranged between the mirrors 140, 141, or between the output mirror 110 of the master oscillator 101 and the mirror 140.

The term "provided downstream of the power amplifier 121" may include a variety of arrangements of the plane-parallel plate wherein electromagnetic radiation emitted by the power amplifier 121 is transmitted through the plane-parallel plate 143 before being supplied to a device utilizing the electromagnetic radiation such as, for example, a system for recrystallizing a semiconductor film on a substrate. While, in some embodiments, the plane-parallel plate 143 may be located adjacent the output mirror 143 of the power amplifier 121, as shown in Fig. 1, in other embodiments, defecting elements such as one or more mirrors and/or prisms may be provided between the output mirror 129 of the power amplifier 121 and the plane-parallel plate 143.

An alteration of one of the plane-parallel plates 142 adapted to reduce a distortion of a wavefront of electromagnetic radiation emitted by the laser 100 may be determined.

For this purpose, the laser 100 may be operated. To this end, power sources connected to the electrodes 103, 104, 125, 126 may be operated such that a pulsed voltage is applied between the electrodes 103, 104 and between the electrodes 123, 124. and an electric discharge is created in the laser gas 108 as well as in the laser gas 128. The electric discharge may create a population inversion in portions of the laser gases 108, 128 between the electrodes 103, 104, 123, 124. Thus, laser radiation may be created in the master oscillator 101, and the laser radiation may be amplified by the power amplifier 121.

A wavefront of the electromagnetic radiation emitted by the laser 100 may be measured. For this purpose, the electromagnetic radiation emitted by the laser 100 or a portion thereof may be supplied to a wavefront sensor 150.

In some embodiments, the wavefront sensor 150 may comprise a Schack-Hartmann wavefront sensor of a type known to persons skilled in the art. As persons skilled in the art know, a Schack-Hartmann wavefront sensor comprises an aperture comprising a plurality of subapertures arranged in an array. The aperture of the Schack-Hartmann sensor receives the electromagnetic radiation emitted by the laser, wherein a diameter of the aperture may be approximately equal to a diameter of the laser beam. Thus, each of the subapertures receives a spatial section of the laser beam. At each of the subapertures, a lens is provided. At the focus of each of the lenses, a detector such as, for example, a CCD detector, is provided. The lenses focus the spatial section of the laser beam impinging thereon to a focal spot, the position of which may be detected by means of the detector. The position of the focal spot depends on the direction of incidence of the spatial section of the laser beam on the respective subaperture, thus being representative of a gradient of the wavefront. A two-dimensional integration process may then be employed to determine the wavefront of the electromagnetic radiation emitted by the laser 100.

Thereafter, a difference between the measured wavefront and a desired wavefront may be calculated. In some embodiments of the present invention, a desired wavefront of the laser 100 may be substantially planar.

Subsequently, an alteration of one or both of the plane-parallel plates 142, 143 adapted to reduce the difference between the measured wavefront and the desired wavefront of the laser 100 may be calculated on the basis of the difference between the measured wavefront and the desired wavefront.

In some embodiments, the alteration of one or both of the plane-parallel plates 142, 143 may comprise a modification of a shape of one of the surfaces of the respective plane-parallel plate 142, 143. In particular, the alteration of the surface may comprise providing a curvature of the surface such that the respective plane-parallel plate deviates from a substantially plane-parallel configuration. Methods of calculating a curvature of a surface providing a desired modification of the wavefront of electromagnetic radiation transmitted therethrough are known to persons skilled in the art.

Subsequently, the shape of one or both of the plane-parallel plates 142, 143 is changed on the basis of the desired alteration. After the change of the shape of the plane-parallel plates 142, 143, the modified surface of the plane-parallel plates 142, 143 may deflect electromagnetic radiation emitted by the laser 100 in such a manner that the deviation between the desired wavefront of the electromagnetic radiation and the wavefront which was measured before the change of the shape of one or both of the plane-parallel plates 142, 142 is reduced.

The shape of one or both of the plane-parallel plates 142, 143 may be changed by removing portions of one or both plane-parallel plates 142, 143, for example by means of known machining techniques such as, for example, ion beam figuring and/or plasma assisted chemical etching.

In some embodiments, determining the alteration of the plane-parallel plate 142 and changing the shape of the plane-parallel plate 142 may be performed before determining the alteration of the plane-parallel plate 143 and changing the shape of the plane-parallel plate 143.

In such embodiments, light emitted by the master oscillator 101 may be supplied to the wavefront sensor 150 without being amplified in the power amplifier 121, the wavefront of the light emitted by the master oscillator 101 may be measured, a difference between the measured wavefront and the desired wavefront of the electromagnetic radiation emitted by the master oscillator 101 may be calculated, the alteration of the plane-parallel plate 142 may be determined and the shape of the plane-parallel plate 142 may be changed. Subsequently, light emitted by the power amplifier 121 may be supplied to the wavefront sensor 150, the wavefront of the light emitted by the power amplifier may be measured, a difference between the measured wavefront and the desired wavefront of the electromagnetic radiation emitted by the power amplifier may be calculated, the alteration of the plane-parallel plate 143 may be determined and the shape of the plane-parallel plate 143 may be changed.

The present invention is not restricted to embodiments wherein both the plane-parallel plate 142 and the plane-parallel plate 143 are provided. In other embodiments, one of the plane-parallel plates 142, 143 may be omitted.

In some embodiments wherein the laser 100 is adapted for emitting pulsed laser radiation, the wavefront of the electromagnetic radiation emitted by the laser 100 may be measured for a plurality of laser pulses, and an average of the measurements may be calculated. The alteration of one or both of the plane-parallel plates may then be determined on the basis of the calculated average. Thereby, distortions of the wavefront occurring on short timescales can be averaged out, and the plane-parallel plates 142, 143 are adapted such that distortions of the wavefront that substantially do not vary with time or vary very slowly with time are corrected.

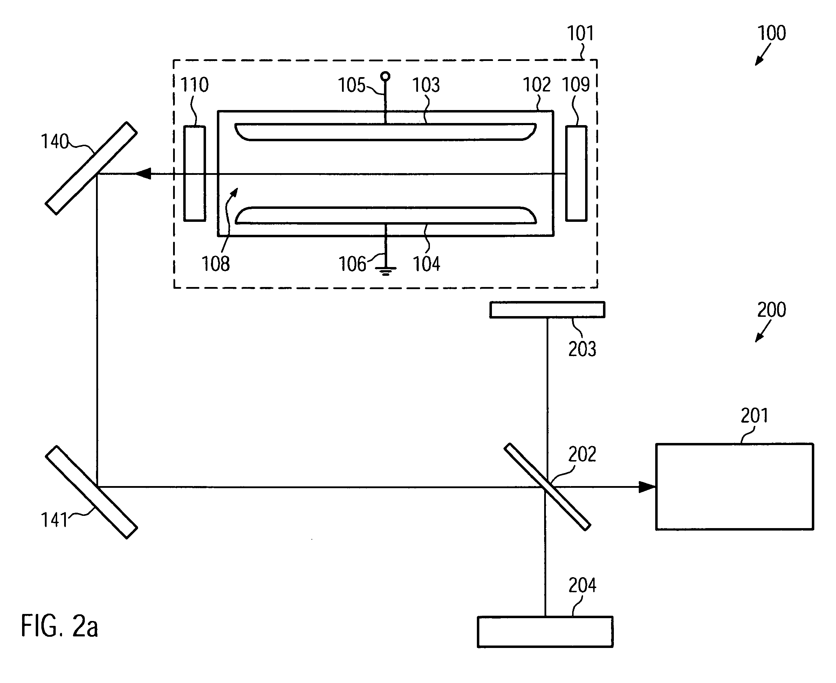

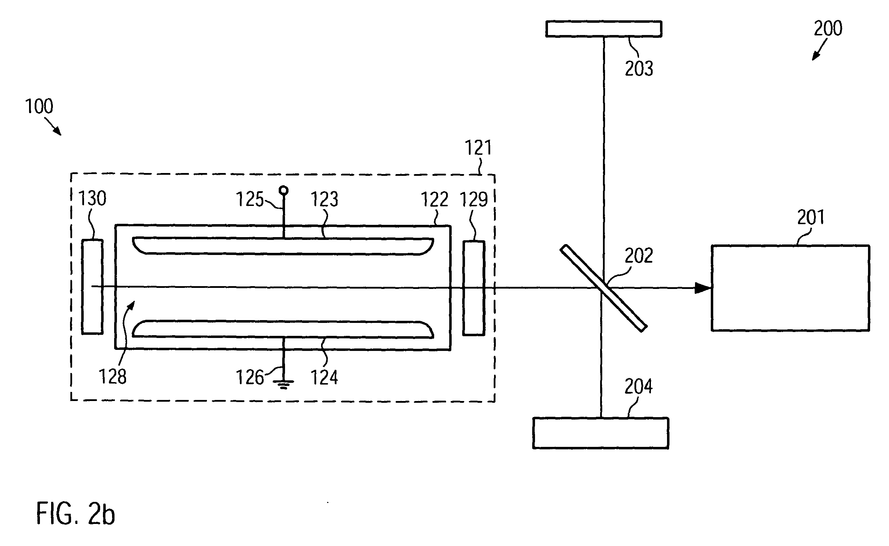

Further embodiments of the present invention will be described with reference to Figs. 2a and 2b.

Fig. 2a shows a schematic cross-sectional view of the laser 100 in a first stage of a method according to the present invention. For convenience, in Fig. 2a and in Fig. 1, like reference numerals are used to denote like components. Features of the laser system 100 may correspond to those described above with reference to Fig. 1.

In the following, embodiments of the present invention will be described wherein an alteration of an optical element adapted to reduce a distortion of the wavefront of light emitted by the laser 100 is determined by means of an interferometer 200. In such embodiments, first a correction of wavefront distortions caused by the master oscillator 101 may be performed. In some embodiments, the power amplifier 121 may be removed and the interferometer 200 may be inserted into the optical path of the laser 100 instead of the power amplifier, or the master oscillator 101 may be removed from the laser 100 and can be inserted into an optical system wherein the interferometer 200 is provided.

The interferometer 200 comprises a reference light source 201, a beam splitter 202, a reference mirror 203 and a light detector 204. In some embodiments, the reference mirror 203 may be a substantially planar mirror. The light detector 204 may comprise any type of detector known to persons skilled in the art, for example a CCD chip. The reference light source 201 may be adapted to emit light having a wavelength which is approximately equal to the wavelength of the electromagnetic radiation emitted by the laser 100 during the operation of the laser 100.

Electromagnetic radiation emitted by the reference light source 201 may be directed to the beam splitter 202. The beam splitter 202 creates a first beam, which is directed to the laser 100, and a second beam. In the embodiment shown in Fig. 2a, the first beam is reflected by the mirrors 141, 140 towards the output mirror 110 of the master oscillator 101. A portion of the first beam is transmitted by the output mirror 110 and reflected by the back mirror 109 of the master oscillator 101. The reflected first beam is reflected towards the beam splitter 202 by the mirrors 140, 141. The beam splitter 202 directs a portion of the reflected first beam towards the light detector 204.

The second beam 203 is directed towards the reference mirror 203. The reference mirror 203 reflects the second beam 203 back towards the beam splitter 202. A portion of the reflected second beam is transmitted by the beam splitter 202 and impinges on the light detector 204.

At the light detector 204, the reflected first beam and the reflected second beam are superimposed, which may lead to an interference between the reflected first beam and the reflected second beam. Thus, an interference pattern between the reflected first beam and the reflected second beam may be formed at the detector 204, and the interference pattern may be measured by means of the detector 204.

The interference pattern between the reflected first beam and the reflected second beam may be influenced by properties of optical elements in the master oscillator 101. In particular, the interference pattern may be influenced by distortions of the wavefront of the first beam which are created by the optical elements in the master oscillator 101. Since the properties of the optical elements in the master oscillator 101 may also have an influence on the wavefront of electromagnetic radiation emitted by the master oscillator 101 during the operation of the laser 100, distortions of the wavefront of the electromagnetic radiation emitted by the master oscillator 101 may be reduced by changing the shape of one of the optical elements in the master oscillator 101, for example the shape of the output mirror 110 and/or the shape of the back mirror 109 in such a manner that the interference pattern between the reflected first beam and the reflected second beam corresponds to a desired interference pattern which is obtained if the master oscillator 101 affects the wavefront of electromagnetic radiation passing through the master oscillator 101 in a desired manner.

In some embodiments, the interference pattern between the reflected first beam and the reflected second beam obtained after changing the shape of one of the optical elements in the master oscillator need not be identical to the desired interference pattern. In such embodiments, the shape of the optical element may be changed in such a manner that the difference between the measured interference pattern and the desired interference pattern is reduced.

In order to change the shape of one of the optical elements in the master oscillator 101, for example the shape of the output mirror 110 for reducing distortions of the wavefront of electromagnetic radiation emitted by the master oscillator 101, an alteration of the shape of the optical element may be determined from the measured interference pattern by means of methods well known to persons skilled in the art. Thereafter, the shape of the optical element may be changed on the basis of the determined alteration by removing a portion of the optical element. This can be done by methods for the machining of optical elements well known to persons skilled in the art such as, for example, ion beam figuring or plasma assisted chemical etching.

In some embodiments of the present invention, the laser 100 may comprise a first fan (not shown) provided in the master oscillator 101 for creating a flow of the laser gas 108, and a second fan (not shown) for creating a flow of the laser gas 128 in the power amplifier 121. Creating a flow of the laser gases 108, 128 may help to remove ionized particles from the discharge regions between the electrodes 103, 104 and between the electrodes 123, 124 after a laser pulse, such that the next laser pulse may be substantially unaffected by the ionized particles.
Due to the flow of the laser gases 108, 128, density gradients may be created in the laser gases 108, 128. Since the optical index of refraction of the laser gases 108, 128 may depend on the density of the laser gases 108, 128, the density gradients may affect the wavefront of electromagnetic radiation emitted by the master oscillator 101 and the power amplifier 121.

In some embodiments, the first fan and the second fan may be operated while measurements are performed by means of the interferometer 200. Hence, density gradients in the laser gases 108, 128 may be approximately equal to density gradients obtained during the operation of the laser 100. Thus, effects of the density gradients may be considered in the measurement of the interference pattern between the first reflected beam and the second reflected beam. Hence, when the alteration of the optical element in the master oscillator 101 is determined on the basis of the measured interference pattern and the shape of the optical element is changed on the basis of the determined alteration, distortions of the wavefront caused by the density gradients may be taken into account. This may help to reduce a distortion of the wavefront of the electromagnetic radiation emitted by the master oscillator 101 caused by the density gradients.

In some embodiments, the power sources connected to the electrodes 103, 104 and the electrodes 123, 124 are not operated during the measurement of the interference pattern between the first reflected beam and the second reflected beam. Thus, an adverse influence of laser radiation emitted by the laser 100 on the interferometer 200 and/or a perturbation of the measurement of the interference pattern by the laser radiation may be avoided.

In some embodiments, the interference pattern between the reflected first beam and the reflected second beam may be measured before the formation of a reflective coating on the output mirror 110 of the master oscillator 101. Thus, only a relatively small portion of the first beam is reflected at the output mirror 110, and the first beam is substantially reflected at the back mirror 109 of the master oscillator 101. After changing the shape of the output mirror 110, the reflective coating may be formed on the output mirror 110.

Fig. 2b shows a schematic cross-sectional view of portions of the laser 100 and the interferometer 200 in a later stage of a method according to an embodiment of the present invention.

After correcting distortions of the wavefront of electromagnetic radiation emitted by the master oscillator 101 as described above, a shape of an optical element provided in the power amplifier 121 may be changed for reducing wavefront distortions caused by the power amplifier 121. In some embodiments, a shape of the output mirror 129 of the power amplifier may be changed.

To determine an alteration of the optical element in the power amplifier 121 adapted to reduce the wavefront distortion caused by the power amplifier, the first beam of the radiation from the reference light source 201 may be directed to the output mirror 129 of the power amplifier. During the measurement, the output mirror 129 need not be covered by a reflective coating. Thus, a relatively large fraction of the electromagnetic radiation from the reference light source 201 may enter the resonator of the power amplifier 121, which is provided by the back mirror 130 and the output mirror 129, and may be reflected by the back mirror 130. The reflected first beam may then be superimposed with the second beam reflected from the reference mirror 203, and an interference pattern between the reflected first beam and the reflected second beam may be measured by means of the light detector 204. Thereafter, an alteration of one of the optical elements in the power amplifier, for example an alteration of the output mirror 129, may be calculated from the measured interference pattern using methods known to persons skilled in the art.

In some embodiments, the power amplifier 121 may be removed from the laser device 100 for measurements performed by means of the interferometer 200. In other embodiments, the power amplifier 121 may remain at its position in the laser device 100 for performing the measurements.

Similar to the correction of wavefront distortions caused by the master oscillator 101 which was described above with reference to Fig. 2a, a fan for creating a flow of the laser gas 128 in the power amplifier 121 may be operated during the interferometric measurements. Thus, wavefront distortions caused by density gradients of the laser gas 128 in the power amplifier 121 may be taken into account when the alteration of one of the optical elements in the power amplifier 121 is determined.

After determining the alteration of one of the optical elements in the power amplifier 121, for example an alteration of the output mirror 129, the shape of the optical element may be changed on the basis of the determined alteration by removing a portion of the optical element. In some embodiments, this can be done by machining the respective optical element by means of known methods such as ion beam figuring and/or plasma chemical etching. Subsequently, in embodiments wherein the measurement of distortions of the wavefront by means of the interferometer 200 is performed in the absence of a reflective coating on the output mirror 129, a reflective coating may be formed on the output mirror 129.

As an alternative to determining an alteration of the output mirror 129 and changing the shape of the output mirror 129, in other embodiments, an alteration of the shape of the back mirror 130 may be determined, and the shape of the back mirror 130 may be changed on the basis of the determined alteration. In still further embodiments, both the shape of the back mirror 130 and the shape of the front mirror 129 may be changed to correct wavefront distortions caused by the power amplifier 121.

In other embodiments of the present invention, a wavefront sensor may be employed for determining the alteration of one or more optical elements in the master oscillator 101 and/or the power amplifier 121 instead of the interferometer 200. To measure the wavefront, techniques similar to those described above with reference to Fig. 1 may be employed. In such embodiments, the mirrors 109, 110 of the master oscillator 101 and the mirrors 130, 129 of the power amplifier may be coated with a reflective coating when the measurements of the wavefront are performed, such that the laser 100 is in an operative state.

In some embodiments, first a distortion of the wavefront of electromagnetic radiation emitted by the master oscillator 101 may be measured. For this purpose, the electromagnetic radiation emitted by the master oscillator 101 when the laser 100 is operated or a portion thereof may be supplied to a wavefront sensor of a type known to persons skilled in the art such as, for example, a Schack-Hartmann wavefront sensor. Thereafter, an alteration of the shape of one of the optical elements of the master oscillator 101, for example an alteration of the shape of the output mirror 110 and/or the back mirror 109 can be determined on the basis of a difference between the measured wavefront and a desired wavefront, and the shape of the respective optical element can be changed on the basis of the determined alteration, as described above.

Subsequently, the laser 100 may be operated again, and the electromagnetic radiation emitted by the power amplifier or a portion thereof may be supplied to the wavefront sensor for measuring the wavefront of the electromagnetic radiation emitted by the power amplifier 121. A difference between the measured wavefront and the desired wavefront may be calculated, and an alteration of the shape of the output mirror 129 and/or the back mirror 130 of the power amplifier may be calculated on the basis of the difference between the measured wavefront and the desired wavefront. Then, the output mirror 129 and/or the back mirror 130 can be machined to change the shape of the output mirror 129 and/or the back mirror 130 in accordance with the calculated alteration of the shape of the respective mirror.

## Claims

1. A method of reducing a divergence of a laser beam, comprising:
providing a laser comprising at least one active medium and a plurality of optical elements, wherein at least some of said optical elements form at least one resonator;
determining an alteration of one of said plurality of optical elements adapted to reduce a distortion of a wavefront of electromagnetic radiation emitted by said laser; and
removing at least one portion of the one of the optical elements to change a shape of said one of said optical elements on the basis of said determined alteration.

2. A method as in claim 1, wherein determining said alteration of said one of said plurality of optical elements comprises:
operating said laser;
measuring a wavefront of electromagnetic radiation emitted by said laser;
calculating a difference between the measured wavefront and a desired wavefront; and
calculating said alteration of said one of said plurality of optical elements on the basis of said difference between said measured wavefront and said desired wavefront.

3. A method as in claim 2, wherein measuring said wavefront of electromagnetic radiation emitted by said laser comprises supplying at least a portion of said electromagnetic radiation emitted by said laser to a Schack-Hartmann wavefront sensor.

4. A method as in any of claims 2 and 3, wherein said laser is adapted for emitting pulsed laser radiation, and wherein measuring said wavefront of electromagnetic radiation emitted by said laser comprises performing measurements of said wavefront for a plurality of laser pulses and calculating an average of said measurements.

5. A method as in any of claims 1 to 4, wherein determining said alteration of said one of said plurality of optical elements comprises:
directing electromagnetic radiation from a reference light source to a beam splitter to form a first beam and a second beam;
directing said first beam to said laser, said first beam being reflected in said laser;
reflecting said second beam at a reference mirror;
superimposing said reflected first beam and said reflected second beam;
measuring an interference pattern of said reflected fist beam and said reflected second beam; and
calculating said alteration of said one of said plurality of optical elements on the basis of said measured interference pattern.

6. A method as in claim 5, wherein said plurality of optical elements comprises a laser output mirror, wherein said method further comprises forming a reflective coating on said laser output mirror, and wherein said determination of said alteration of said one of said plurality of optical elements is performed before said formation of said reflective coating.

7. A method as in any of claims 5 and 6, wherein said laser is a gas laser comprising a fan for creating a flow of a laser gas, and wherein said fan is operated during said measurement of said interference pattern.

8. A method as in any of claims 5, 6 and 7, wherein said laser is not operated to emit laser radiation during said measurement of said interference pattern.

9. A method as in any of claims 1 to 6, wherein said one of said plurality of optical elements comprises a plane-parallel plate provided in an optical path of said laser, and wherein removing a portion of said one of said plurality of optical elements comprises machining said plane-parallel plate.

10. A method as in claim 9, wherein said laser comprises a maser oscillator and a power amplifier, and wherein said plane-parallel plate is provided between said master oscillator and said power amplifier.

11. A method as in claim 9, wherein said laser comprises a master oscillator and a power amplifier, and wherein said plane-parallel plate is provided downstream of said power amplifier.

12. A method as in any of claims 1 to 6, wherein said one of said plurality of optical elements is an optical element forming a part of said at least one resonator, and wherein removing a portion of said one of said optical elements comprises machining said one of said plurality of optical elements.

13. A method as in claim 12, wherein said one of said plurality of optical elements comprises a mirror of said at least one laser resonator.

14. A method as in any of claims 1 to 13, wherein an alteration of two or more of said plurality of optical elements adapted to reduce a distortion of said wavefront is determined, and wherein a shape of each of said two or more of said plurality of optical elements is changed on the basis of the determined alteration.

15. A method as in claim 14, wherein said laser comprises a master oscillator and a power oscillator, and wherein a shape of a first of said two or more of said plurality of optical elements is changed to reduce distortions of a wavefront of electromagnetic radiation emitted by said master oscillator, and wherein a shape of a second of said two or more of said plurality of optical elements is changed to correct distortions of a wavefront of electromagnetic radiation emitted by said power amplifier.
